# FASCICULE DE BREVET EUROPEEN

(11) **EP 2 953 326 B1**
(45) Date de publication et mention de la délivrance du brevet: **24.08.2022**
(21) Numéro de dépôt: 15170338.6
(22) Date de dépôt: 02.06.2015
(51) Int. Cl.: H04L 67/02, H04L 67/08, H04L 67/14

(54) **PROCÉDÉ ET DISPOSITIF DE PARTAGE D'APPLICATION**
VERFAHREN UND VORRICHTUNG ZUR TEILUNG EINER ANWENDUNG
METHOD AND DEVICE FOR APPLICATION SHARING

(30) Priorité: 03.06.2014 FR 1455012
(43) Date de publication de la demande: 09.12.2015
(73) Titulaire: Orange, 92130 Issy-les-Moulineaux (FR)
(72) Inventeur: LACHARME, Sandrine, 22300 LANNION (FR); BAUMANN, Maximilien, 78180 MONTIGNY-LE-BRETONNEUX (FR)

(56) Documents cités:
- WO-A1-2007/111487
- WO-A1-2014/029944
- GB-A- 2 470 811
- KR-A- 20130 127 630
- US-A1- 2012 117 145
- US-A1- 2013 125 009
- US-A1- 2013 246 905
- US-A1- 2014 129 622
- YASUSHI SHINJO ET AL: "A distributed web browser as a platform for running collaborative applications", COLLABORATIVE COMPUTING: NETWORKING, APPLICATIONS AND WORKSHARING (COLLABORATECOM), 2011 7TH INTERNATIONAL CONFERENCE ON, ICST, 15 octobre 2011 (2011-10-15), pages 278-286, XP032106386, ISBN: 978-1-4673-0683-6
- MARCIN DAVIES ET AL: "Evaluating two approaches for browser-based real-time multimedia communication", ADVANCES IN MOBILE COMPUTING & MULTIMEDIA, ACM, 2 PENN PLAZA, SUITE 701 NEW YORK NY 10121-0701 USA, 3 décembre 2012 (2012-12-03), pages 109-117, XP058029750, DOI: 10.1145/2428955.2428982 ISBN: 978-1-4503-1307-0

## Description

L'invention concerne un procédé et un dispositif de partage d'applications, ledit procédé de partage étant mis en œuvre par un client léger d'un terminal de communication. En particulier, le client léger est de type Web RTC.

Le partage d'applications se développe permettant d'étayer au moyen de document une conférence téléphonique ou une visioconférence, mais aussi des cours à distance. Ainsi, le conférencier ou le professeur peut modifier sa présentation et/ou les outils utilisés pour son exposé tout au long de celui-ci en fonction des interventions des participants.

Une autre utilisation du partage d'application est la prise en main à distance permettant soit d'expliquer une utilisation d'un outil à un utilisateur néophyte, soit de corriger un problème de fonctionnement (hotline par exemple).

Aujourd'hui, les solutions proposées pour le partage d'application nécessitent l'installation sur le terminal de communication partageant une application d'un dispositif de partage comme la solution de la demande de brevet américaine US2013125009. Le dispositif de partage peut être, notamment, un logiciel téléchargé à partir d'un client léger. Ce dispositif de partage est notamment démarrer par lancement du dispositif de partage directement à partir du terminal de l'utilisateur ou via un client léger du terminal de l'utilisateur.

Ce dispositif de partage est positionné sur le terminal de communication car, pour des raisons de sécurité, le dispositif système (communément nommé OS du terminal de communication) n'est pas autorisé à dialoguer avec un client léger, en particulier à transmettre la liste des applications en cours d'utilisation (fenêtres d'application ouvertes ou réduites) sur ledit terminal.

Or, le dispositif de partage peut s'avérer encombrant sur le terminal de communication, d'autant plus s'il n'est pas régulièrement utilisé. Et sa mise à jour peut être lourde en terme de traitement pour le terminal de communication et en terme charge de pour les réseaux de communications.

Un des buts de la présente invention est d'apporter des améliorations par rapport à l'état de la technique.

L'invention est définie par les revendications indépendantes 1, 3 et 4.

Un objet de l'invention est un procédé de partage selon la revendication indépendante 1.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un client léger d'un premier terminal de communication et étant conçus pour commander l'exécution des différentes étapes de ce procédé.

L'invention vise donc aussi un programme selon la revendication indépendante 3, comprenant des instructions de code de programme pour l'exécution des étapes du procédé de partage selon la revendication indépendante 1, lorsque ledit programme est exécuté par un processeur.

Ce programme peut utiliser n'importe quel langage de programmation et être sous la forme de code source, code objet ou code intermédiaire entre code source te code objet tel que dans une forme partiellement compilée ou dans n'importe quelle autre forme souhaitable.

Un objet de l'invention est aussi un dispositif de partage selon la revendication indépendante 4.

Un autre objet de l'invention est un terminal de communication comportant au moins:
- Un dispositif système,
- un client léger comportant un dispositif de partage selon l'invention, et
- une interface entre le client léger et le dispositif système du terminal de communication.

Les caractéristiques et avantages de l'invention apparaîtront plus clairement à la lecture de la description, faite à titre d'exemple, et des figures s'y rapportant qui représentent :
- Figure 1, un schéma simplifié d'un procédé de partage selon l'invention,
- Figure 2, un schéma simplifié d'un procédé interface, selon l'invention, entre le procédé de partage et un procédé système,
- Figure 3, un diagramme simplifié d'échanges lors d'un partage d'une application selon l'invention,
- Figure 4, un schéma simplifié d'une architecture comportant un terminal de communication selon l'invention,

Par client léger est entendu qui n'a presque pas de logique d'application. Il dépend donc surtout d'un serveur central (à distance) pour le traitement. Dans le cadre des applications « Web », l'utilisation du client léger simplifie le travail en éliminant le besoin de diffuser, puis d'installer un logiciel client sur les machines des utilisateurs. Ces logiciels continuent à exister sur le client léger.

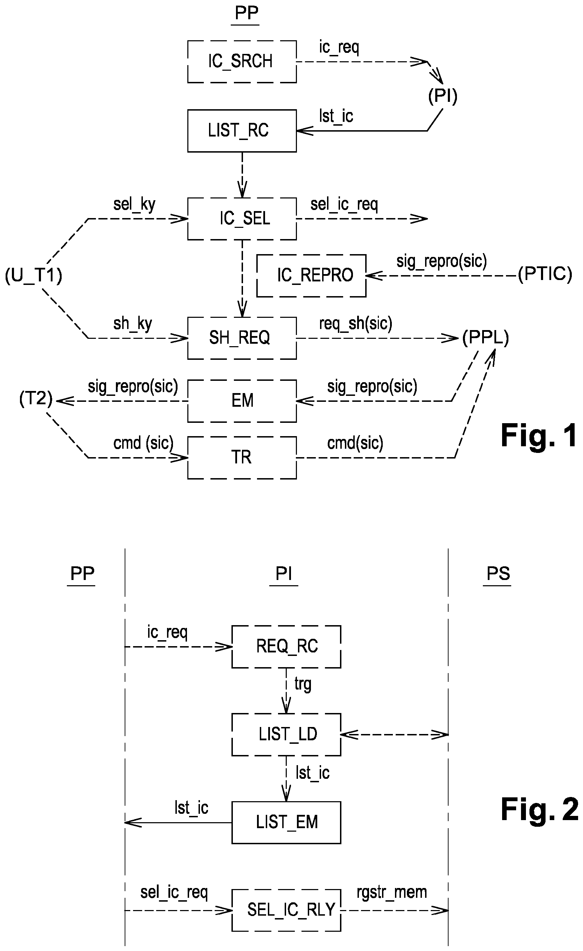

La figure 1 illustre un schéma simplifié d'un procédé de partage selon l'invention.

Le procédé de partage PP permet un partage par un premier terminal de communication T1 à au moins un deuxième terminal de communication T2 d'au moins une application parmi les applications mises en œuvre par ledit premier terminal de communication T1. Le procédé de partage PP comporte une réception LIST_RC, par un client léger CL mettant en œuvre ledit procédé de partage PP, d'une liste *Ist_ic* des applications en cours d'utilisation par ledit premier terminal. La liste *Ist_ic* est fournie par un procédé interface PI entre ledit procédé de partage PP et un procédé système PS (illustré sur la figure 2) dudit premier terminal T1. La liste *Ist_ic* reçue permet une sélection IC_SEL d'une application à partager fournissant au moins signal transmis par ledit client léger *sig_repro(sic).*

En particulier, le procédé de partage PP comporte une recherche IC_SRCH des applications en cours d'utilisation par ledit premier terminal T1. Ladite recherche IC_SRCH requiert *ic_ req,* notamment, la liste des applications en cours d'utilisation par ledit premier terminal T1 à un procédé interface PI entre ledit procédé de partage PP et un procédé système PS dudit premier terminal T1.

En particulier cette requête *ic_req* des applications en cours d'utilisation par ledit premier terminal T1 au procédé interface PI déclenche l'émission d'une liste des applications en cours d'utilisation *Ist_ic,* et donc, sa réception LIST_RC par le procédé de partage PP.

L'utilisateur du premier terminal U_T1 peut choisir parmi les applications de la liste reçu *Ist_ic* une application à partager avec un deuxième terminal T2. Notamment, l'utilisateur choisit l'application au moyen d'un clavier, d'une manette de jeux, d'une interface à commande vocale, d'une interface tactile, d'une interface à commande gestuelle... (non illustrés).

En particulier, le procédé de partage PP comporte une sélection IC_SEL par un utilisateur dudit premier terminal U_T1 d'une application dans ladite liste *sic,* ladite application sélectionnée *sic* sera partagée au moyen dudit client léger à au moins un deuxième terminal de communication.

En particulier, le procédé de partage PP comporte une sélection d'une application à partager IC_SEL parmi les applications de la liste reçue Ist_ic. Cette sélection est, notamment, fonction du choix *sel_ky* effectué par l'utilisateur du premier terminal U_T1.

Ladite sélection IC_SEL déclenche, notamment, une reproduction IC_REPRO, par le client léger du premier terminal T1 mettant en œuvre ledit procédé de partage, de ladite application sélectionnée. En particulier, le procédé de partage PP comporte ladite reproduction IC_REPRO de ladite application sélectionnée. Par exemple, le procédé de traitement de l'application PTIC fournit au client léger un signal de production de ladite application sélectionnée *sig_repro(sic).*

Ainsi, l'utilisateur du premier terminal U_T1 voit grâce à son client léger (navigateur Internet par exemple) l'application qu'il vient de choisir tel qu'elle sera transmise au deuxième terminal T2 s'il choisit de la partager.

En particulier, la sélection IC_SEL transmet la requête de sélection sel_ic_req au procédé interface PI. Cette requête de sélection sel_ic_req déclenche, notamment, une mémorisation dans un registre d'un identifiant de l'application sélectionnée sel_ic_req par un procédé système PS sur commande du procédé interface PI, permettant ultérieurement lors d'une demande de partage à un procédé périphérique leurre PPL de se placer comme périphérique de réception pour ladite application en récupérant ledit identifiant dans le registre .

L'utilisateur du premier terminal U_T1 peut choisir de partager l'application sélectionnée *sic* avec un deuxième terminal T2. Notamment, l'utilisateur indique son choix de partage au moyen d'un clavier, d'une manette de jeux, d'une interface à commande vocale, d'une interface tactile, d'une interface à commande gestuelle... (non illustrée).

En particulier, le procédé de partage PP comporte une action de partage SH_REQ par un utilisateur dudit premier terminal U_T1 d'une application dans ladite liste (par exemple d'une application préalablement sélectionnée *sic).* L'application sera partagée au moyen dudit client léger à au moins un deuxième terminal de communication.

En particulier, le procédé de partage PP comporte une action de partage d'une application SH_REQ parmi les applications de la liste reçue Ist_ic. Cette action de partage est, notamment, fonction du choix de partage *sh*_*ky* effectué par l'utilisateur du premier terminal U_T1.

En particulier, l'action de partage SH_REQ transmet une requête de partage sh_req à un procédé périphérique leurre PPL mis en œuvre par le premier terminal T1. Ainsi, le procédé périphérique leurre PPL reçoit, en tant que périphérique de reproduction pour l'application partagée, le signal de production de l'application partagée et transmet ce signal de reproduction *sig_repro(sic)* via le procédé de partage PP au deuxième terminal (terminal destinataire du partage dans notre exemple).

En particulier, le procédé de partage PP comporte une transmission EM via ledit client léger d'au moins des données de reproduction *sig_repro(sic)* de ladite application sélectionnée audit au moins un deuxième terminal T2.

En particulier, le procédé de partage PP comporte une transmission TR via ledit client léger d'au moins des données d'interaction *cmd(sic)* de ladite application sélectionnée dudit au moins un deuxième terminal vers ledit premier terminal.

En particulier, la sélection et le partage peuvent faire l'objet d'une seule et même requête déclenchant tout à la fois la mémorisation de l'identifiant de l'application partagée dans un registre, la reproduction de l'application partagée sur le premier terminal et le relai du signal de reproduction de l'application partagée par un périphérique leurre vers le deuxième terminal via une session de communication entre clients léger des premier et deuxième terminaux.

En particulier, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un client léger d'un premier terminal de communication et étant conçus pour commander l'exécution des différentes étapes de ce procédé.

Le programme comprend des instructions de code de programme pour l'exécution des étapes du procédé de partage lorsque ledit programme est exécuté par un processeur.

La figure 2 illustre un schéma simplifié d'un procédé interface PI, selon l'invention, entre le procédé de partage PP et un procédé système PS.

Le procédé interface PI est placé entre:
- un procédée de partage PP d'un premier terminal de communication T1 à au moins un deuxième terminal de communication T2d'au moins une application parmi les applications mises en œuvre par ledit premier terminal de communicationT1, ledit procédé de partage PP étant mis en œuvre par un client léger CL dudit premier terminal T1, et
- un procédé système PS mis en œuvre par ledit premier terminal T1.

Le procédé interface PI comporte une émission LIS_EM d'une liste *Ist_ic* des applications en cours d'utilisation par ledit premier terminal T1. La liste *Ist_ic* est récupérée auprès du procédé système PS. La liste *Ist_ic* émise permet une sélection, par le procédé de partage, d'une application à partager fournissant au moins signal transmis par ledit client léger.

En particulier, l'émission LIST_EM est déclenchée *trg* par une réception REQ_RC d'une requête *ic_req* de liste d'applications provenant dudit client léger, en particulier du procédé de partage PP mis en œuvre par le client léger CL.

Notamment, la réception REQ_RC déclenche *trg* une récupération LIST_LD de la liste des applications en cours d'utilisation auprès du procédé système PS. La récupération LIST_LD fournit alors la liste récupérée *Ist_ic* à l'émission LIST_EM.

En particulier, le procédé interface PI comporte un relai de sélection SEL_IC_RLY qui commande une mémorisation *rgstr_mem* par le procédé système PS d'un indentant d'une application sélectionnée dans un registre du dispositif système du premier terminal. Ce relai de sélection SEL_IC_RLY commande la mémorisation notamment sur réception d'une requête de sélection sel_ic_req du procédé de partage PP.

En particulier, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un terminal de communication et étant conçus pour commander l'exécution des différentes étapes de ce procédé.

Le programme comprend des instructions de code de programme pour l'exécution des étapes du procédé interface lorsque ledit programme est exécuté par un processeur.

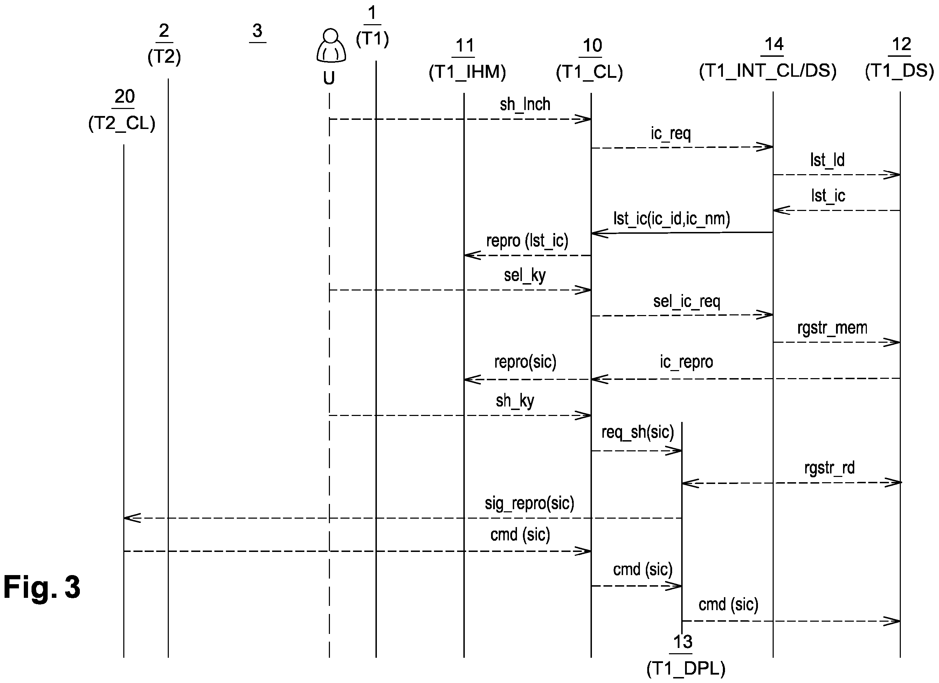

La figure 3 illustre un diagramme simplifié d'échanges lors d'un partage d'une application selon l'invention.

En particulier, l'utilisateur U d'un premier terminal de communication T1 (1) lance *sh_Inch* au moyen d'une interface utilisateur ou interface homme-machine T1_IHM (11) un dispositif de partage client léger T1_CL (10) du premier terminal 1.

Le lancement du dispositif de partage 10 déclenche, notamment, la recherche des applications en cours d'utilisation par le premier terminal 1 et, par exemple, l'envoie d'une requête des applications en cours d'utilisation *ic_req* du dispositif de partage 10 à une interface entre le client léger 10 et un dispositif système T1_DS (12) du premier terminal 1 (aussi nommée interface client léger/système).

En particulier, l'interface client léger/système 14 récupère *Ist_Id* auprès du dispositif système la liste *Ist_ic* des applications en cours d'utilisation, puis la transmet *Ist_ic(ic_id, ic_nm)* au dispositif de partage 10. Cette liste *Ist_ic* comporte au moins un identifiant des applications en cours d'utilisations ic_id, et éventuellement un nom des applications en cours d'utilisation *ic_nm.* Elle peut en outre comporter, un lien vers une icône associée à chacune des applications en cours d'utilisation et/ou un descriptif des applications en cours d'utilisation ...

Le dispositif de partage 10 déclenche, notamment, la reproduction *repro(list_ic)* de la liste reçue par l'interface utilisateur 11 afin de permettre à l'utilisateur U de choisir dans les applications en cours d'utilisation celle qu'il souhaite partager avec le deuxième terminal T2.

En particulier, l'utilisateur U indique son choix, en l'occurrence l'application qu'il sélectionne en vue d'un partage sel_ky, au moyen de l'interface utilisateur 11 au dispositif de partage 10.

En particulier, le dispositif de partage 10 requiert sel_ic_req la sélection d'une application, notamment celle choisie par l'utilisateur U, auprès de l'interface client léger/système 14 qui commande *rgstr_mem* , notamment, la mémorisation dans un registre du dispositif système 12 d'un identifiant *ic_id* de l'application sélectionnée *sic.* L'identifiant est un identifiant système unique représentant une fenêtre d'une application, aussi nommé HWND dans l'exemple d'un système Windows.

En particulier, la requête de sélection d'une application sel_ic_req par le dispositif de partage 10 déclenche la récupération par le dispositif de partage 10 du signal de reproduction *ic_repro* de l'application sélectionnée permettant la reproduction *repro(sic)* de l'application sélectionnée par le dispositif de partage notamment au moyen l'interface utilisateur 11.

Ainsi, le dispositif de partage client léger 10 montre à l'utilisateur U du premier terminal dans la fenêtre de reproduction du client léger 10, par exemple, une fenêtre de l'application sélectionnée. L'utilisateur U disposera ainsi sur son interface utilisateur 11 de l'application sélectionnée tel qu'en disposera l'utilisateur du terminal T2 (2) si l'utilisateur U du premier terminal T1 décide de partager l'application sélectionnée.

En particulier, l'utilisateur U indique son choix, en l'occurrence de partage l'application sélectionnée sh_ky, au moyen de l'interface utilisateur 11 au dispositif de partage 10.

En particulier, le dispositif de partage 10 requiert *sh_req* le partage de l'application sélectionnée, auprès d'un périphérique leurre T1_DPL (13) du premier terminal 1. Ainsi, le périphérique leurre 13 se place comme périphérique de reproduction pour l'application sélectionnée et reçoit le signal de reproduction de l'application sélectionnée *sig_repro(sic)* qu'il relaie au dispositif de partage 10 qui le transmet au client léger T2_CL (20) du deuxième terminal T2 destinataire du partage.

Pour se placer comme périphérique de reproduction de l'application sélectionnée, le périphérique leurre 13 lit, notamment, dans un registre *rgstr_rd* l'identifiant de l'application sélectionnée.

En outre, un dispositif de traitement non illustré peut servir se placer comme périphérique d'interaction auprès de l'application sélectionnée. Ainsi, le deuxième terminal 2 envoie une commande d'interaction avec l'application sélectionnée cmd(sic) qui est relayée soit vers le client léger terminal 1 à destination de l'interface client léger/système 14, soit directement vers l'interface client léger/système 14. L'interface client léger/système 14 comporte notamment le dispositif de traitement qui permet, par exemple, d'injecter la commande d'interaction dans la pile d'exécution de l'application sélectionnée.

Ainsi, pour la reproduction de l'application sélection *sic* et, éventuellement pour l'interaction avec celle-ci, le deuxième terminal 2, plus particulièrement, son client léger 20 est considéré par l'application sélectionnée *sic* mise en œuvre par le terminal 1 comme périphérique local.

En particulier, le périphérique leurre 13 est un module leurre tel que décrit dans la demande internationale WO2014029944, et/ou tel quel décrit dans la demande de brevet français FR2990820.

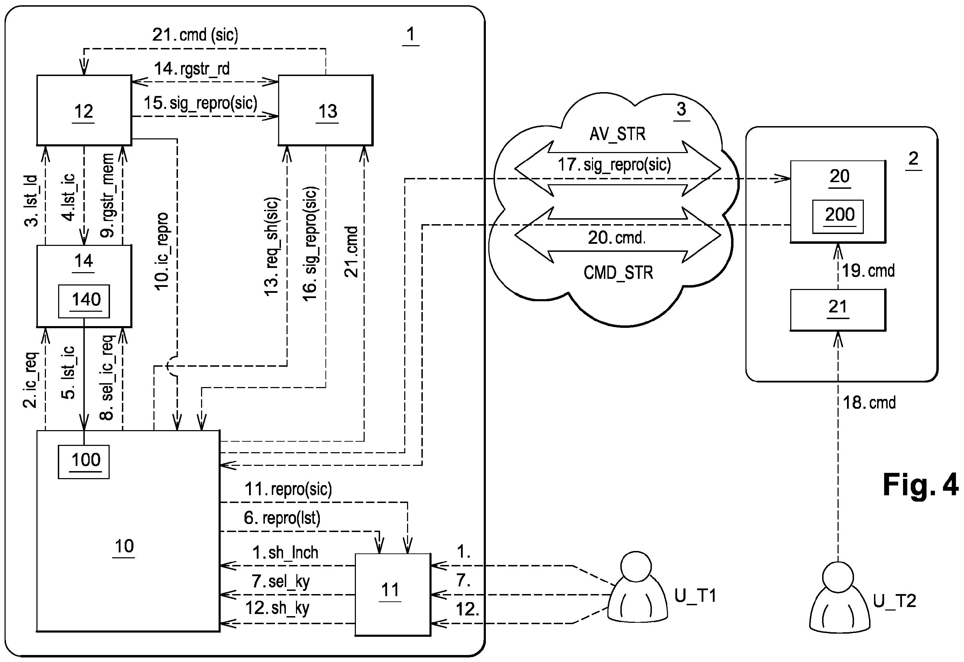

La figure 4 illustre un schéma simplifié d'une architecture comportant un terminal de communication selon l'invention.

Un dispositif de partage 10 selon l'invention est un dispositif de partage d'un premier terminal de communication 1 à au moins un deuxième terminal de communication 2 d'au moins une application parmi les applications mises en œuvre par ledit premier terminal de communication. Le dispositif de partage 10 comporte un récepteur 100 d'une liste *Ist_ic* des applications en cours d'utilisation par ledit premier terminal 1. La liste *Ist_ic* est fournie par une interface 14 entre un client léger comportant ledit dispositif de partage 10 et un dispositif système 12 dudit premier terminal 1. La liste *Ist_ic* reçue permet une sélection d'une application à partager fournissant au moins signal transmis par ledit client léger. Le premier terminal comporte un client léger comportant ledit dispositif de partage.

Dans la description, le client léger et le dispositif de partage ne sont pas distingués (une seule référence 10) car il sera fait seulement référence au dispositif de partage du client léger. En effet, la description ne fera pas mention d'autre dispositif du client léger car ils ne sont pas utilisés par l'invention.

En particulier, le dispositif de partage 10 peut comporter en outre (non illustré) un moteur de recherche des applications en cours d'utilisation par le premier terminal 1. Le moteur de recherche requiert *2.ic_req* les applications en cours d'utilisation par le premier terminal 1 à l'interface client léger/système 14 du premier terminal 1.

En particulier, le dispositif de partage 10 peut comporter en outre (non illustré) un récepteur de liste d'applications *5.Ist_ic* en cours d'utilisation par le premier terminal 1.

En particulier, le dispositif de partage 10 peut comporter en outre (non illustré) un sélecteur d'application requérant une application sélectionnée *8.sel_ic_req* à l'interface client léger/système 14.

En particulier, le dispositif de partage 10 peut comporter en outre (non illustré) un dispositif de reproduction d'application sélectionnée recevant notamment le signal de reproduction de l'application sélectionnée *10.ic_repro.*

En particulier, le dispositif de partage 10 peut comporter en outre (non illustré) un actionneur de partage requérant le partage de l'application sélectionnée *13.req_sh(sic)* à un dispositif périphérique leurre 13.

En particulier, le dispositif de partage 10 peut comporter en outre (non illustré) un émetteur utilisant une session de communication entre clients léger des premier et deuxième terminaux 1, 2 notamment pour transmettre le signal de reproduction de l'application sélectionnée *17.sig_repro(sic)* suite à la requête de partage.

En particulier, l'interface client léger/système 14 peut comporter en outre (non illustré) un dispositif de traitement utilisant une session de communication entre clients léger des premier et deuxième terminaux 1, 2 notamment pour recevoir une commande d'interaction *20.cmd* avec l'application sélectionnée suite à la requête de partage et l'injecter dans la pile d'exécution de l'application sélectionnée.

Une interface client léger/système 14 selon l'invention est une interface entre un client léger 10 d'un premier terminal de communication1, ledit client léger 10 comportant un dispositif de partage d'applications dudit premier terminal 1 à au moins un deuxième terminal de communication2, et un dispositif système 12 dudit premier terminal de communication1. L'interface 14 comporte un émetteur 140 d'une liste *5.Ist_ic* des applications en cours d'utilisation par ledit premier terminal. La liste *Ist_ic* est récupérée *3.Ist_Id* auprès du dispositif système 12 dudit premier terminal1. La liste *5.Ist_ic* émise permet une sélection, par le dispositif de partage 10, d'une application à partager fournissant au moins signal transmis par ledit client léger 10.

En particulier, le dispositif de partage 10 peut comporter en outre (non illustré) un récepteur de requête déclenchant, suite à la réception d'une requête 2. *ic_req* des applications en cours d'utilisation, l'émetteur 140.

En particulier, le dispositif de partage 10 peut comporter en outre (non illustré) un récupérateur des applications en cours d'utilisation auprès d'un dispositif système 12 (*3.Ist_Id, 4.Ist_Ic)* commandé par une requête 2. *ic_req* des applications en cours d'utilisation provenant du dispositif de partage 10 (en particulier par un récepteur de requête ayant reçu cette requête). Le récupérateur fournissant à l'émetteur 140 la liste à émettre.

En particulier, le dispositif de partage 10 peut comporter en outre (non illustré) un relai de sélection commandant la mémorisation dans un registre du dispositif système 12 d'un identifiant de l'application sélectionnée *9.rgstr_mem,* notamment suite à la réception d'une requête d'une application sélectionnée *8.sel_ic_req* provenant du dispositif de partage 10.

Un terminal de communication selon l'invention est un premier terminal 1 comportant au moins:
- un dispositif système 12,
- un client léger comportant un dispositif de partage 10 selon l'invention, et
- une interface 14 entre le client léger et le dispositif système du terminal de communication selon l'invention.

En particulier, l'interface client léger/système 14 est connectée d'un côté au dispositif de partage 10 du client léger du premier terminal 1, et de l'autre au dispositif système 12 du premier terminal 1 permettant ainsi de transmettre au client léger (donc au dispositif de partage 10) des données provenant du dispositif système 12 sans être bloqué par des sécurités du système.

Ainsi, la liste des applications en cours d'utilisation par le premier terminal 1 dont dispose le dispositif système 12 peut être récupérée *3.Ist_Id, 4.Ist_ic* par l'interface client léger/système 14 et transmise *5.Ist_ic* au dispositif de partage 10.

En particulier, le premier terminal 1 comporte en outre une interface utilisateur 11, connectée au moins au dispositif de partage 10.

En particulier, l'interface utilisateur 11 permet à l'utilisateur U_T1 du premier terminal d'interagir avec les applications utilisées par le premier terminal 1 (non illustré) et avec le client léger, plus particulièrement avec le dispositif de partage 10 du client léger. Notamment, l'interface utilisateur 11 permet de démarrer le dispositif de partage *1.sh_Inch,* de sélectionner une application *7.sel_ky* dans une liste d'application en cours d'utilisation par le premier terminal fournie *6.repro(Ist)* par le dispositif de partage 10, de partager l'application sélectionnées *12.sh_ky.*

En particulier, le premier terminal 1 comporte un dispositif périphérique leurre 13 connecté au client léger, en particulier au dispositif de partage 10, et au dispositif système 12.

La figure 4 montre en outre un deuxième terminal de communication 2 destinataire du partage dans l'exemple de la figure 4.

Le deuxième terminal 2 comporte un client léger 20 et une interface de commande utilisateur 21 pour l'utilisateur U_T2 du deuxième terminal 2. Le client léger 20 comporte un dispositif de reproduction 200.

Lorsque le dispositif de partage 10 a requis une application sélectionnée 8.sel_ic_req, l'application sélectionnée est, notamment, reproduite *10.ic_repro* via le dispositif de partage 10 *11.repro(sic)* sur l'interface utilisateur 11.

Lorsque le dispositif de partage 10 a requis le partage *13.req_sh(sic),* le dispositif périphérique leurre 13 se place comme périphérique de reproduction de l'application sélectionnée notamment en lisant *14.rgstr_rd* l'identifiant de l'application sélection dans le registre du dispositif système 12. Ainsi, le dispositif périphérique leurre 13 reçoit le signal de reproduction *15.sig_repro(sic)* de l'application sélectionnée et le relaie au deuxième terminal 2 via la session de communication entre le premier et le deuxième terminal 1, 2 établit par respectivement le client léger 10 du premier terminal et le client léger 20 du deuxième terminal à travers un réseau de communication 3. Notamment, un flux audio vidéo AV_STR est ainsi transmis entre les deux terminaux 1, 2 portant le signal de reproduction *17.sig_repro(sic).*

Eventuellement, l'utilisateur du deuxième terminal U_T2 commande *18.cmd* une interaction avec l'application partagée au moyen de l'interface de commande 21 qui la transmet *19.cmd* au client léger 20 puis *21.cmd* à un dispositif de traitement non illustré de l'interface client léger/système 14 du premier terminal 1 au moyen d'un flux de commande CMD_STR portant ladite commande d'interaction 20.cmd.

Il est à noter, que le deuxième terminal 2 peut lui aussi comporter un dispositif de partage client léger (non illustré), et une interface client léger/système en plus d'un dispositif système permettant à l'utilisateur U_T2 du deuxième terminal 2 de partager une application en cours d'utilisation sur le deuxième terminal 2 avec le premier terminal 1 via le flux de reproduction AV_STR et/ou avec un autre deuxième terminal ( non illustré).

L'invention sera avantageusement mis en œuvre en utilisant un client léger utilisant le langage HTML 5.0, notamment de type WebRTC. Le Web RTC est une technologie qui permet d'établir des communications audio/vidéo à partir de client léger, notamment de navigateur Internet ou Web. La transmission du signal de reproduction de l'application partagée entre le premier terminal et le deuxième terminal se fera alors via une session de communication Web RTC. L'invention permet aussi la prise en main à distance via, notamment, une session de communication Web Socket.

Prenons le cas où deux utilisateurs U_T1 et U_T2 se connectent à un service de partage proposé sur Internet au moyen de leur clients légers respectifs 10, 20.

Lors du premier accès au portail de service hébergé sur un équipement distant (serveur Web par exemple) dans le réseau de communication, l'équipement distant propose d'installer un procédé interface client léger/système (notamment sous la forme d'un logiciel mettant en œuvre les étapes du procédé) ou un dispositif interface client léger/système en local sur le terminal de l'utilisateur. Ce dispositif interface client léger/système 14 est notamment un serveur Web Socket qui :
- récupère la liste des applications en cours d'utilisation, par exemple la liste des applications actives et iconifies dans Windows,
- et transmet la liste au service de partage (notamment à la page Web du service de partage sur le client local).

En particulier, la liste des applications en cours d'utilisation comporte des données telles que le titre, et l'identifiant de la fenêtre de l'application.

Lors de la sélection d'une application par l'utilisateur (Alice) du terminal 1, le client léger 10 fournit l'identifiant de la fenêtre d'application à partager à l'interface client léger/système 14. Celui-ci inscrit cet identifiant dans la base de registre. Et, le périphérique leurre 13, aussi nommé périphérique de capture du client léger, utilise l'identifiant pour faire diffuser l'application partagée par le client léger 10 via le réseau de communication 3 vers un terminal 2 d'un autre utilisateur (Bob). Le terminal 2 de Bob est connecté au service de partage : Bob voit donc sur son terminal 2 la vidéo de l'application partagée.

Si Alice décide de donner la main à Bob sur l'application partagée, un message est envoyé à un client léger du terminal 2 de Bob, notamment mis en œuvre par des Web Socket ou une API Data Channel Web RTC... Le message s'affiche alors dans le client léger 200 de Bob. Après validation par Bob sur son terminal 2 de l'option de prise en main de l'application partagée par Alice, toutes les commandes *18.cmd* du terminal 2 de Bob sont retransmises via l'interface client léger/système du terminal 2 à l'interface client léger/système 14 d'Alice. Bob prend alors le contrôle du terminal 1 d'Alice.

L'invention vise aussi au moins un support. Le support d'informations peut être n'importe quelle entité ou dispositif capable de stocker au moins un des programmes selon l'invention. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Au moins un des programmes selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessous. Un composant matériel correspond à tout élément d'un ensemble matériel (ou hardware) apte à mettre en œuvre une fonction ou un ensemble de fonctions.

## Revendications

1. Procédé de partage (pp) d'utilisation, par un premier terminal de communication (T1, 1) avec au moins un deuxième terminal de communication (T2, 2), d'au moins une application parmi des applications mises en œuvre par ledit premier terminal de communication (T1, 1), ledit procédé de partage d'utilisation étant mis en œuvre par un client léger (CL, 10) du premier terminal de communication, ledit procédé comportant
• la réception (LIST_RC) d'une liste des applications (5.Ist_ic) en cours d'utilisation par ledit premier terminal (T1, 1), ladite liste (5.Ist_ic) étant reçue, via une interface (T1_INT_CL/DS, 14) , d' un dispositif système (T1_DS, 12) dudit premier terminal (T1, 1), . la réception, sur la base de ladite liste (5. list_ic) reçue, de la sélection (IC_SEL) d'une application à partager (7. sel_ky),
• la transmission (EM) d'au moins des données de reproduction (sig_repro(sic)), reçues de ladite application sélectionnée**,** audit au moins un deuxième terminal (T2, 2); et
• la transmission (TR) à ladite application sélectionnée d'au moins des données d'interaction (cmd) avec ladite application sélectionnée reçues dudit au moins un deuxième terminal (T2, 2).

2. Procédé de partage d'utilisation (PP) selon la revendication précédente **caractérisé en ce que** ledit procédé de partage (PP) comporte la réception de la sélection (IC_SEL) par un utilisateur dudit premier terminal (U_T1, U) de l'application à partager dans ladite liste, l'utilisation de ladite application sélectionnée (sic) étant ensuite partagée avec au moins le deuxième terminal de communication (T2, 2).

3. Programme comprenant des instructions de code de programme pour l'exécution des étapes du procédé de partage d'utilisation (PP) selon l'une quelconque des revendications précédentes lorsque ledit programme est exécuté par un processeur.

4. Dispositif de partage (10) d'utilisation, par un premier terminal de communication (T1, 1) avec au moins un deuxième terminal de communication (T2, 2), d'au moins une application parmi des applications mises en œuvre par ledit premier terminal de communication (T1, 1), ledit dispositif de partage étant inclus dans un client léger (CL, 10), lui-même inclus dans le premier terminal de communication, ledit dispositif de partage comportant
• un récepteur (100) d'une liste des applications (Ist_ic) en cours d'utilisation par ledit premier terminal 1), ledit récepteur étant apte à recevoir ladite liste (Ist_ic), via une interface (T1_INT_CL/DS, 14), d' un dispositif système (T1_DS, 12) dudit premier terminal 1), . un récepteur apte à, sur la base de ladite liste reçue, recevoir la sélection (IC_SEL) d'une application à partager (7. sel_ky);
• un émetteur d'au moins des données de reproduction (sig_repro(sic)), reçues de ladite application sélectionnée, audit au moins un deuxième terminal (T2, 2); et
• un émetteur, à ladite application sélectionnée, d'au moins des données d'interaction (cmd) avec ladite application sélectionnée reçues dudit au moins un deuxième terminal (T2, 2) .

5. Terminal de communication (1, T1) comportant au moins:
• un dispositif système (T1_DS, 12),
• un client léger (CL, 10) comportant un dispositif de partage d'utilisation selon la revendication 4, et
• une interface (T1_INT_CL/DS, 14), l'interface étant implémentée entre le client léger (CL, 10) et le dispositif système (T1_DS, 12) du terminal de communication (1, T1).

## Patentansprüche

1. Verfahren zur gemeinsamen Nutzung (PP), von einem ersten Kommunikationsendgerät (T1, 1) mit mindestens einem zweiten Kommunikationsendgerät (T2, 2), mindestens einer Anwendung unter Anwendungen, die vom ersten Kommunikationsendgerät (T1, 1) durchgeführt werden, wobei das Verfahren zur gemeinsamen Nutzung von einem Lean Client (CL, 10) des ersten Kommunikationsendgeräts durchgeführt wird, wobei das Verfahren aufweist
• den Empfang (LIST_RC) einer Liste der Anwendungen (5. lst_ic), die gerade vom ersten Endgerät (T1, 1) verwendet werden, wobei die Liste (5. lst_ic) über eine Schnittstelle (T1_INT_CL/DS, 14) einer Systemvorrichtung (T1_DS, 12) des ersten Endgeräts (T1, 1) empfangen wird,
• den Empfang, auf der Basis der empfangenen Liste (5. lst_ic), der Auswahl (IC_SEL) einer gemeinsam zu nutzenden Anwendung (7. sel_ky),
• die Übertragung (EM) mindestens der Wiedergabedaten (sig_repro(sic)), empfangen von der ausgewählten Anwendung, an das mindestens eine zweite Endgerät (T2, 2); und
• die Übertragung (TR) an die ausgewählte Anwendung mindestens der Interaktionsdaten (cmd) mit der ausgewählten Anwendung, die vom mindestens einen zweiten Endgerät (T2, 2) empfangen werden.

2. Verfahren zur gemeinsamen Nutzung (PP) nach dem vorhergehenden Anspruch, **dadurch gekennzeichnet, dass** das Verfahren zur gemeinsamen Nutzung (PP) den Empfang der Auswahl (IC_SEL) durch einen Benutzer des ersten Endgeräts (U_T1, U) der gemeinsam zu nutzenden Anwendung in der Liste aufweist, wobei die Verwendung der ausgewählten Anwendung (sic) anschließend mit mindestens dem zweiten Kommunikationsendgerät (T2, 2) gemeinsam genutzt wird.

3. Programm, das Programmcodeanweisungen zur Ausführung der Schritte des Verfahrens zur gemeinsamen Nutzung (PP) nach einem der vorhergehenden Ansprüche enthält, wenn das Programm von einem Prozessor ausgeführt wird.

4. Vorrichtung zur gemeinsamen Nutzung (10), von einem ersten Kommunikationsendgerät (T1, 1) mit mindestens einem zweiten Kommunikationsendgerät (T2, 2), mindestens einer Anwendung unter Anwendungen, die vom ersten Kommunikationsendgerät (T1, 1) durchgeführt werden, wobei die Vorrichtung zur gemeinsamen Nutzung in einem Lean Client (CL, 10) enthalten ist, der selbst im ersten Kommunikationsendgerät enthalten ist, wobei die Vorrichtung zur gemeinsamen Nutzung aufweist
• einen Empfänger (100) einer Liste der Anwendungen (lst_ic), die gerade vom ersten Endgerät (T1, 1) verwendet werden, wobei der Empfänger die Liste (lst_ic) über eine Schnittstelle (T1_INT_CL/DS, 14) einer Systemvorrichtung (T1_DS, 12) des ersten Endgeräts (T1, 1) empfangen kann,
• einen Empfänger, der auf der Basis der empfangenen Liste die Auswahl (IC_SEL) einer gemeinsam zu nutzenden Anwendung (7. sel_ky) empfangen kann;
• einen Sender mindestens der Wiedergabedaten (sig_repro(sic)), die von der ausgewählten Anwendung empfangen werden, an das mindestens eine zweite Endgerät (T2, 2); und
• einen Sender, an die ausgewählte Anwendung, mindestens der Interaktionsdaten (cmd) mit der ausgewählten Anwendung, die vom mindestens einen zweiten Endgerät (T2, 2) empfangen werden.

5. Kommunikationsendgerät (1, T1), das mindestens aufweist:
• eine Systemvorrichtung (T1_DS, 12),
• einen Lean Client (CL, 10), der eine Vorrichtung zur gemeinsamen Nutzung nach Anspruch 4 aufweist, und
• eine Schnittstelle (T1_INT_CL/DS, 14), wobei die Schnittstelle zwischen dem Lean Client (CL, 10) und der Systemvorrichtung (T1_DS, 12) des Kommunikationsendgeräts (1, T1) eingebaut wird.

## Claims

1. Method (PP) for sharing use, by a first communication terminal (T1, 1) with at least a second communication terminal (T2, 2), of at least one application among applications implemented by said first communication terminal (T1, 1), said method for sharing use being implemented by a light client (CL, 10) of the first communication terminal, said method comprising:
• receiving (LIST_RC) a list of applications (5.Ist_ic) being used by said first terminal (T1 1), said list (5.Ist_ic) being received via an interface (T1_INT_CL/DS, 14) of an operating system (T1_DS, 12) of said first terminal (T1, 1),
• receiving, based on said received list (5.Ist_ic), the selection (IC_SEL) of an application to be shared (7.sel_ky),
• transmitting (EM) at least reproduction data (sig_repro(sic)) received from said selected application to said at least a second terminal (T2, 2); and
• transmitting (TR) to said selected application at least data (cmd) on interactions with said selected application, said data being received from said at least a second terminal (T2, 2).

2. Method (PP) for sharing use according to the preceding claim, **characterized in that** said sharing method (PP) comprises receiving the selection (IC_SEL) by a user of said first terminal (U_T1, U) of the application to be shared in said list, use of said selected application (sic) then being shared with at least the second communication terminal (T2, 2) .

3. Program comprising program-code instructions for executing steps of the method (PP) for sharing use according to either one of the preceding claims when said program is executed by a processor.

4. Device (10) for sharing use, by a first communication terminal (T1, 1) with at least a second communication terminal (T2, 2), of at least one application among applications implemented by said first communication terminal (T1 1), said sharing device being included in a light client (CL, 10), itself included in the first communication terminal, said sharing device comprising:
• a receiver (100) for receiving a list of applications (lst_ic) being used by said first terminal (T1, 1), said receiver being able to receive said list (lst_ic) via an interface (T1_INT_CL/DS, 14) of an operating system (T1_DS, 12) of said first terminal (T1, 1),
• a receiver able to, based on said received list, receive the selection (IC_SEL) of an application to be shared (7.sel_ky),
• a transmitter for transmitting at least reproduction data (sig_repro(sic)) received from said selected application to said at least a second terminal (T2, 2); and
• a transmitter for transmitting, to said selected application, at least data (cmd) on interactions with said selected application, said data being received from said at least a second terminal (T2, 2) .

5. Communication terminal (1, T1) comprising at least:
• an operating system (T1_DS, 12),
• a light client (CL, 10) comprising a device for sharing use according to Claim 4, and
• an interface (T1_INT_CL/DS, 14), the interface being implemented between the light client (CL, 10) and the operating system (T1_DS, 12) of the communication terminal (1, T1).
